# EUROPEAN PATENT SPECIFICATION

(11) **EP 1 761 019 B1**
(45) Date of publication and mention of the grant of the patent: **10.03.2010**
(21) Application number: 06290738.1
(22) Date of filing: 09.05.2006
(51) Int. Cl.: H04M 11/00, G08C 17/00, G05D 1/02

(54) **Mobile robot system and method of remote-controlling the same**
Mobilrobotersystem und Verfahren zu seiner Fernsteuerung
Système de robot mobile et procédé de commande à distance de celui-ci

(30) Priority: 30.08.2005 KR 20050079849
(43) Date of publication of application: 07.03.2007
(73) Proprietor: Samsung Gwangju Electronics Co., Ltd., Gwangju-city (KR)
(72) Inventor: Song, Jeong-gon, Gwangsan-gu, Gwangju-city (KR); Jeung, Sam-jong, Gwangsan-gu, Gwangju-city (KR); Lee, Ju-sang, Gwangsan-gu, Gwangju-city (KR)
(74) Representative: Blot, Philippe Robert Emile

(56) References cited:
- EP-A- 1 109 393
- JP-A- 2003 018 670
- US-A1- 2002 120 364
- US-A1- 2004 128 097

## Description

### BACKGROUND OF THE INVENTION

### Field of the Invention

The present invention relates to a mobile robot, and in particular, to a mobile robot system and a method of remotely controlling the same.

### Description of the Related Art

In general, a mobile robot is a robot which autonomously runs to perform a given task. Examples of mobile robots include a cleaning robot, monitoring robots, or the like. Recently, among such mobile robots, cleaning robots have become very popular.

Such a mobile robot is typically capable of autonomously performing a desired task, e.g., cleaning, monitoring, or the like. A user can control the mobile robot using a control panel provided on the body of the mobile robot or a remote control. However, the control of such a mobile robot through a control panel or a remote control is enabled only when the user is positioned near the mobile robot.

Accordingly, what is needed is to provide a remote controllable mobile robot system that enables control of mobile robots, even if a user is not near the robot.

It is known from document JP 2003 018670 a remote controller comprising a robot a server for controlling the robot and an instruction terminal for instructing the server over Internet.

Document US 2002/0120164 is related to an autonomous mobile robot and a system of control of the robot able to guide it towards a fixed station.

Document EP 1 109 393 discloses an apparatus operated by remote control.

Document US 2004/0128097 discloses a sensor calibration system including a robotic platform able to navigate two sensors distributed throughout an environment.

### SUMMARY OF THE INVENTION

Accordingly, the present invention has been made to solve the above-mentioned problems, and an object of the present invention is to provide a mobile robot system, the mobile robot of which can be remote controlled substantially in all places, and a method of remote controlling the same.

To this end, a first aspect of the invention provides a mobile robot system according to any of claims 1 to 10.

Yet another aspect of the invention provides a method according to any to claims 11 to 16.

### BRIEF DESCRIPTION OF THE DRAWINGS

The above aspects and features of the present invention will be more apparent from the description for the following description of non-limiting embodiments of the present invention taken with reference to the accompanying drawings, in which:

FIG. 1 is a schematic view showing a mobile robot system, which is connected to a telephone line, according to a non-limiting embodiment of the present invention;

FIG. 2 is a block diagram showing an exemplary configuration of the mobile robot system of FIG. 1;

FIG. 3 is a block diagram showing an exemplary call connection unit of a home station in the mobile robot system of FIG. 2 according to a non-limiting embodiment of the present invention;

FIG. 4 is a block diagram showing an exemplary call signal conversion unit of the home station in the mobile robot system of FIG. 2 according to a non-limiting embodiment of the present invention;

FIG. 5 is a block diagram showing an exemplary call signal conversion unit of the home station in the mobile robot system of FIG. 2 according to another non-limiting embodiment of the present invention;

FIG. 6 is a block diagram showing the mobile robot of the mobile robot system in FIG. 2 according to a non-limiting embodiment of the present invention;

FIG. 7 is a block diagram showing a mobile robot of the mobile robot system in FIG. 2 according to another non-limiting embodiment of the present invention;

FIG. 8 is a view showing a non-limiting embodiment of the telephone key pad of FIG. 1;

FIG. 9 is a flowchart showing a non-limiting method of remote controlling a mobile robot according to a non-limiting embodiment of the present invention;

FIG. 10 is a flowchart illustrating exemplary steps related to transmitting a control signal in the method of FIG. 9;

FIG. 11 is a flowchart showing a method of remote controlling a mobile robot according to another non-limiting embodiment of the present invention;

FIG. 12 is a flowchart showing a method of remote controlling a mobile robot according to still another non-limiting embodiment of the present invention; and

FIG. 13 is a flowchart illustrating exemplary steps related to transmitting a work completion signal in the method of FIG. 12.

### DETAILED DESCRIPTION OF THE EMBODIMENTS

The exemplary embodiments of the present invention are described in detail with reference to accompanying drawings. In the following description, a cleaning robot including a vacuum cleaning function is used as a non-limiting example. Of course, other robots known to those of skill in the art are within the scope of the present invention.

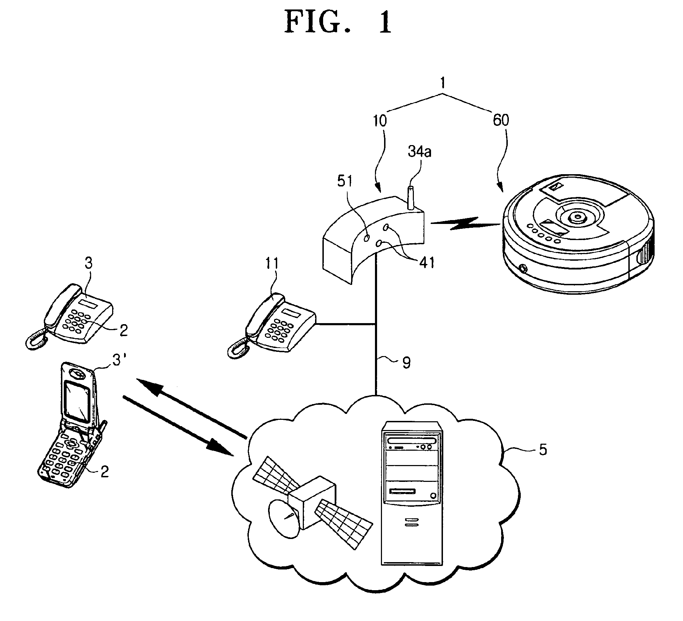

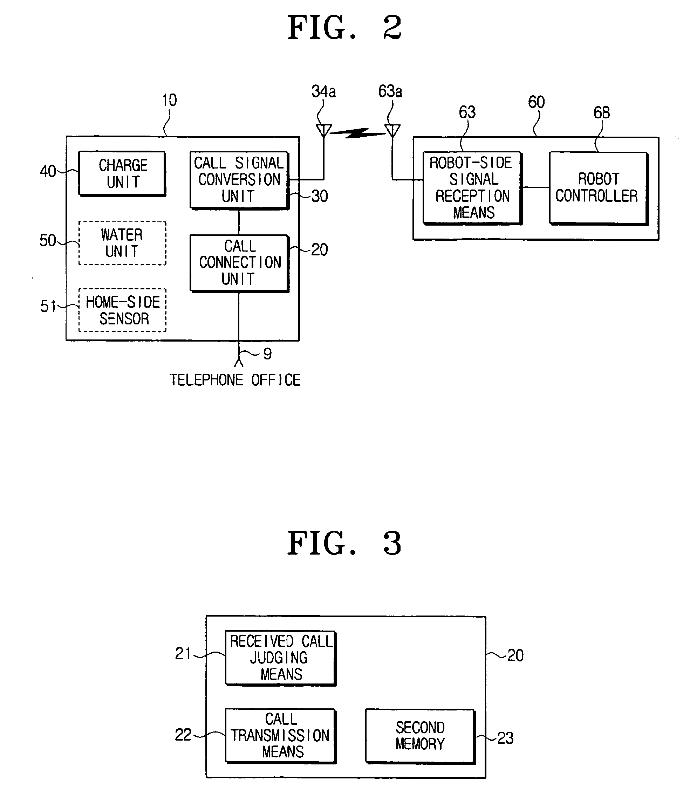

Referring to FIGS. 1 and 2, a mobile robot system 1 according to a first non-limiting embodiment of the present invention may include a home station 10, and a mobile robot 60. The robot 60 may return to the home station 10 to enter a standby mode. The home station 10 may be connected to a telephone line 9, and may include a call connection unit 20, a call signal conversion unit 30, and a charge unit 40. One feature of the present invention includes remotely controlling the mobile robot 60 through the telephone line 9. The telephone line 9 may be connected to telephones 3 and 3' such as a wired telephone, to a portable phone, or to a cellular phone through a communication service supplier 5. If the remote control system of a mobile robot 60 is configured with telephone line 9, it is possible to remotely control the mobile robot 60 at relatively low cost, because substantially all homes and offices are provided with such a telephone line 9.

The call connection unit 20 may be connected to the telephone line 9, which has a telephone number, and may connect an incoming call to the call signal conversion unit 30 when the incoming call is a call for controlling the mobile robot 60 (hereinafter, referred to as a "robot control call"). Because an existing telephone 11 may also connect to the telephone line 9, an incoming call carrying voice information and an incoming call for transferring a call signal for controlling the mobile robot may both be received through the telephone line 9. To avoid unnecessary calls through telephone line 9, it may be desirable to determine whether an incoming call is a robot control call for controlling the mobile robot 60.

Accordingly, the present invention includes the capability of determining the type of incoming call. Referring to FIG. 3, the call connection unit 20 may include a received call judging means 21, a call transmission means 22, and a second memory 23.

The received call judging means 21 may be configured to determine if an incoming call received through the telephone line 9 is a robot control call using, for example, a preset judgment reference. Of course, other methods of determination known to those of skill in the art are within the scope of the present invention.

When it is determined that it is a robot control call, the received call judging means 21 enables the robot control call to be connected, so that the call signal conversion unit 30 can receive the call signal. In addition, when the call signal conversion unit 30 completes reception of the call signal, the received call judging means 21 enables the robot control call to be interrupted.

At this time, if the telephone has been ringing for a predetermined number of times or if predetermined length of time has elapsed after the arrival of the incoming call, the received call judging means 21 may judge that the incoming call is a robot control call. The predetermined length of time and the desired number of rings may be set as desired. For example, it is possible to set the desired number of rings to 10 and the elapsed length of time to 60 seconds. The received call judging means 21 can be set to determine whether an incoming call is a call for voice communication or a robot control call using references other than the above-mentioned methods of determination.

It may be preferable that the received call judging means 21 further be capable of determining if a predetermined identification number is inputted to the received call signal after the call is connected. The received call judging means 21 may also be configured to cut off any call that meets the above-mentioned criteria for the robot control call but is not a robot control call. It may be preferable that such an identification number employs numbers that can be inputted using the keypads of the telephone 3 or 3'.

The call transmission means 22 may also be configured so that it can make a call to a specific telephone number stored in the second memory 23 through the telephone line 9. That is, upon receiving one or more call signals from the call signal conversion unit 30, the call transmission means 22 may make a phone call to a telephone number stored in the second memory 23 and may transmit the call signal. Thereafter, upon completing transmission of the call signal, the call transmission means 22 may interrupt the call. As a result, user can confirm if a work command has been transferred to the mobile robot 60.

The second memory 23 may store a phone number to which the call transmission means 22 may make a call. The phone number may be optionally stored according to the convenience of the user. It may be preferable that a user store a phone number in the second memory 23, which can receive a confirmation call from the mobile robot if the user renders a work command to the mobile robot.

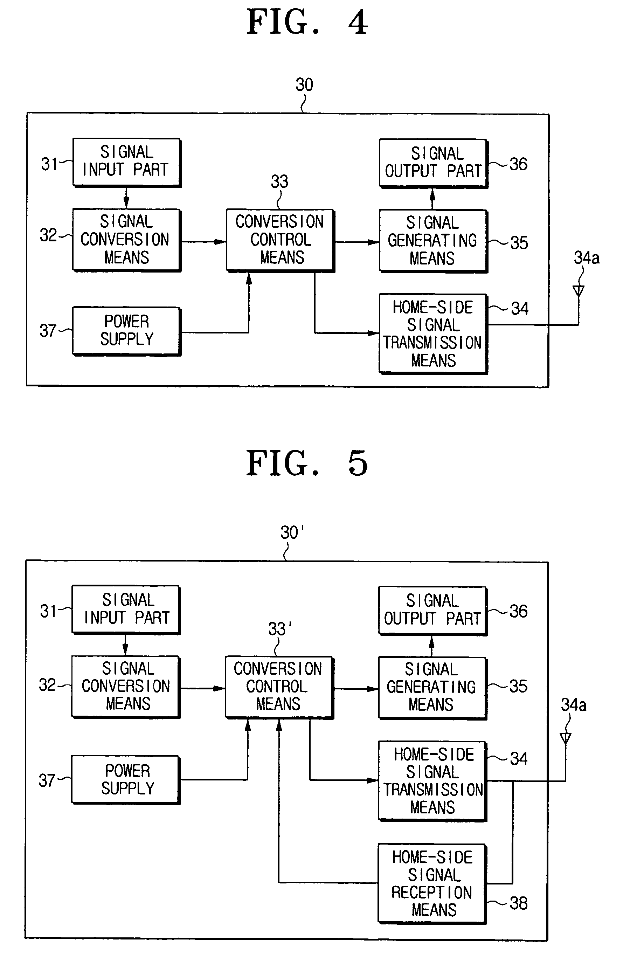

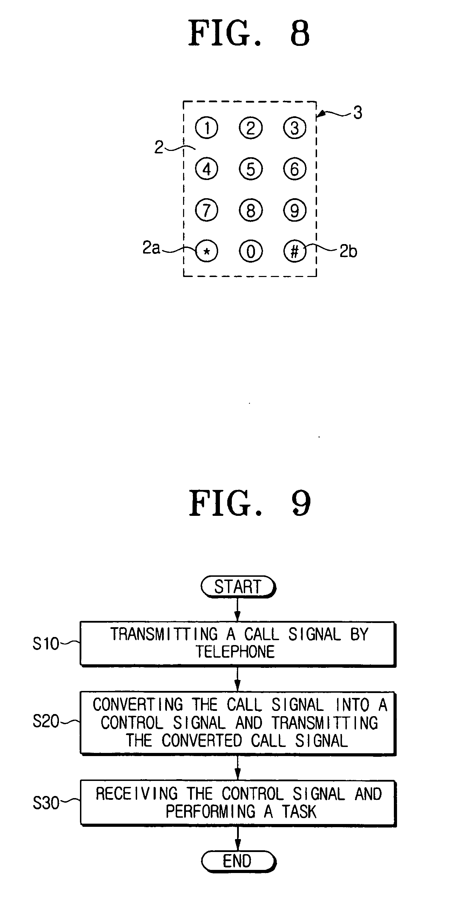

Referring to FIG. 4, the call signal conversion unit 30 may include a signal input part 31, a signal conversion means 32, a conversion control means 33, a home-side signal transmission means 34, a signal generating means 35, and a signal output part 36. The signal input part 31 may be connected to the received call judging means 21 of the call connection unit 20. If a call is connected by the received call judging means 21, the signal input part 31 may receive an inputted call signal. Although many types of signals may be provided, it may be preferable to employ dual tone multi-frequency (DTMF) symbols. The DTMF symbols may enable sending specific signals (e.g., twelve signals) by pushing buttons of the keypads 2 of telephones 3 or 3' (see FIG. 8). If the number buttons (0 to 9) and * and # buttons of the keypad 2 of the telephone 3 or 3' are correlated to desired tasks to be done by the mobile robot 60 in a relationship (such as a one-to-one relationship), it may be possible to render twelve types of tasks to the mobile robot 60 using the telephone 3 or 3'. For example, it is possible to assign the "1" button to a command for cleaning an entire building, such as a house, the "2" button to a command for cleaning a designated room, and the "3" button to a command for stopping other assigned tasks of the mobile robot 60 while the mobile robot 60 is cleaning.

The signal conversion means 32 may convert a signal, which may be inputted into the signal input part 31, into a control signal which can be transmitted to the mobile robot 60 through the home-side signal transmission means 34. For example, if the home-side signal transmission means 34 transmits signals to the mobile robot 60 using an infrared (IR) communication module, the received call signal may be converted into an IR signal. Generally, the signal conversion means 32 converts the received call signal into a corresponding signal depending on the type of the received call signal.

When the signal conversion means 32 completes the conversion of the call signal, the conversion control means 33 may transmit a signal to the home-side signal transmission means 34 of the fact, so that the home-side signal transmission means 34 may transmit a control signal. In addition, if the home-side signal transmission means 34 completes transmission of the control signal, the conversion control means 33 may control the signal generating means 35, so that the signal generating means 35 may generate a call signal corresponding to a transmission completion signal.

The signal generating means 35 may generate a call signal, which can be transmitted through the telephone line 9, according to a command of the conversion control means 33. For example, when DTMF symbols are used as call signals, the signal generating means 35 may generate a DTMF symbol. The call signal generated from the signal generating means 35 may be transmitted to the call transmission means 22 of the call connection unit 20 through the signal output part 36.

The home-side signal transmission means 34 may transmit a control signal to the mobile robot 60 according to the command of the conversion control means 33. In order to transmit a control signal, the home-side signal transmission means 34 may be provided with a home-side antenna 34a. The home-side signal transmission means 34 may employ an IR communication module or a radio-frequency (RF) communication module, depending on the cordless communication method employed between the home-side signal transmission means 34 and the mobile robot 60. In the present non-limiting embodiment, an IR communication module may be employed. Therefore, the home-side signal transmission means 34 may be provided with an IR transmission module and the robot-side signal reception means 63 of the mobile robot 60 may be provided with an IR reception module. A power supply 37 may supply power to the call signal conversion unit 30 including the conversion control means 33.

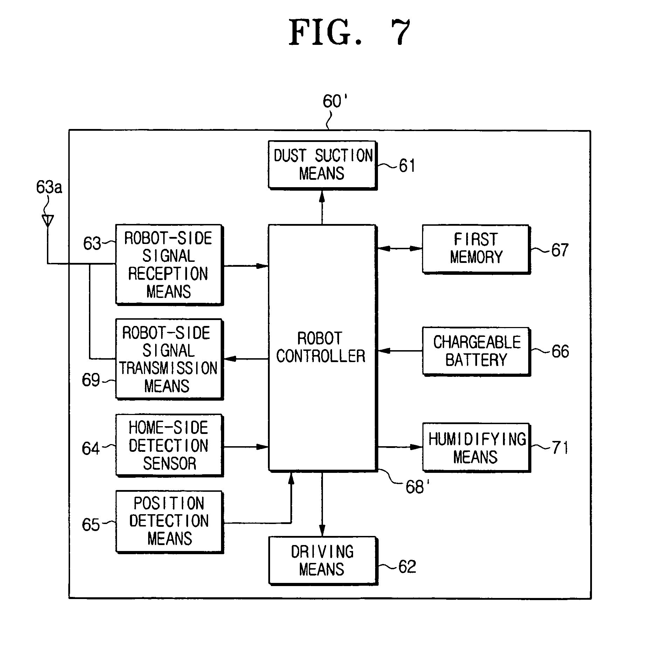

Another non-limiting embodiment of the call signal conversion unit is shown in FIG. 5. The call signal conversion unit 30' according to the present embodiment may further include a home-side signal reception means 38 rather than or in addition to the above-mentioned call signal conversion unit 30. The home-side signal reception means 38 may receive a signal transmitted from a mobile robot 60' (see FIG. 7), which may have a robot-side signal transmission means 69 (see FIG. 7). At this time, it may be preferable that the home-side signal reception means 38 employs a similar communication module as compared to the home-side signal transmission means 34. For example, when an IR transmission module is employed by the home-side signal transmission means 34, it may be preferable that the home-side signal reception means 38 also employs an IR reception module. In addition, a conversion control means 33' may control the signal generating means 35, so that a call signal corresponding to the signal received from the home-side signal reception means 38 may be generated and transmitted to the call connection unit 20.

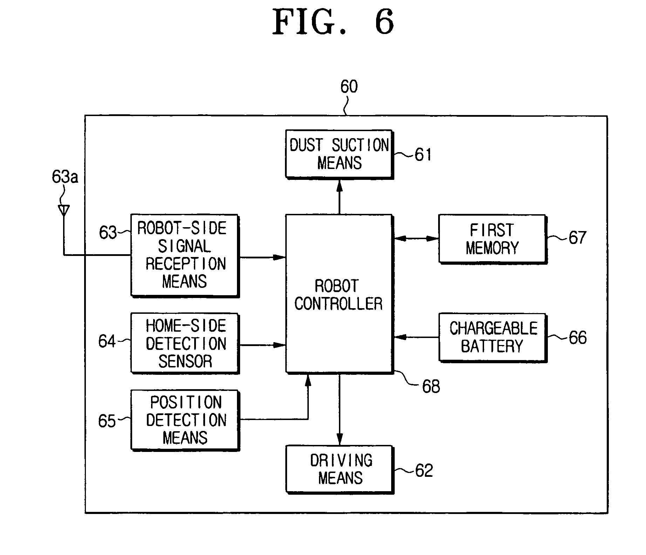

A charge unit 40 may charge a rechargeable battery 66 (see FIG. 6) provided in the mobile robot 60 using a power supply. To this end, the charge unit 40 may be provided with a charge terminal 41. In addition, the home station 10 may be provided with a home-side sensor 51 and a water supply unit 50, as desired.

The home-side sensor 51 may employ a sensor corresponding to a home-side detection sensor 64 (see FIG. 6), so that the home-side detection sensor 64 can perceive the position of the home station 10. For example, if a signal transmission means and a signal reception means including an ultrasonic sensor are employed as the home-side sensor 51 and the home-side detection sensor 64, respectively, the mobile robot 60 can perceive the position of the home station 10. In addition, if the mobile robot 60 can perceive the position of the home station 10 using a CCD camera (not shown), the home-side sensor 51 may not be needed.

A water supply unit 50 may be provided to feed water, which may be required when the mobile unit 60' has a humidifier 71 (see FIG. 7) or is capable of wet-cleaning.

In addition, the home station 10 may be integrally provided with a telephone which may be connected to telephone line 9 (not shown). The telephone line 9 may be wired, wireless, or cellular, as well as of other configurations known to those of skill in the art.

As noted above, the mobile robot 60 of this non-limiting example is configured to include cleaning capabilities. However, other robots having other functions, including multifunction robots are within the scope of the present invention.

An example of the mobile robot 60 is shown in FIG. 6. Referring to FIG. 6, the mobile robot 60 may include a dust suction means 61, a driving means 62, a robot-side signal reception means 63, a position detection means 65, the home-side detection sensor 64, a robot controller 68, and rechargeable battery 66.

The dust suction means 61 may clean by sucking debris from a surface to be cleaned, such as a floor, on which the mobile robot 60 runs. The dust suction means 61 may include a vacuum source for generating suction force, and a dust collection member for separating and collecting suctioned debris, such as soil.

The driving means 62 makes the mobile robot 60 movable in every direction and typically may include plural wheels and plural motors for driving the plural wheels.

The robot-side signal reception means 63 may receive a control signal, which may be transmitted from the call signal conversion unit 30 of the home station 10, and include a robot-side antenna 63a. The robot-side signal reception means 63 may employ a communication module corresponding to the home-side signal transmission means 34 of the call signal conversion unit 30. For example, if the home-side signal transmission means 34 of the call signal conversion unit 30 employs an IR transmission module, the robot-side signal reception means 63 may employ an IR reception module. The position detection means 65 may detect the current position of the mobile robot 60 using a CCD camera or the like. The home-side detection sensor 64 may detect the position of the home station 10 through cooperation with the home-side sensor 51 provided in the home station 10.

The rechargeable battery 66 may supply power to the mobile robot 60. If the rechargeable battery 66 becomes low, the charge unit 40 of the home station 10 may recharge the rechargeable battery 66.

The robot controller 68 may determine the content of a control signal received by the robot-side signal reception means 63 and may perform the task corresponding to the received control signal. Plural programs may be stored in a first memory 67, so that the robot controller 68 can perform a specific task according to the received signal. The tasks to be done by the mobile robot 60 may be stored in the first memory 67 by the user, as desired. When DTMF symbols are employed, it is possible to include a wide variety of programs among the work programs stored in the first memory 67 of the mobile robot 60.

FIG. 7 shows a mobile robot 60' according to another non-limiting embodiment of the present invention. The mobile robot 60' may be the same as similar to the above-mentioned mobile robot 60, except that a robot-side signal transmission means 69 and a humidifying means 71 are provided. The robot-side signal transmission means 69 may transmit a work completion signal to the home-side signal reception means 38 of the home station 10 after the mobile robot 60' performs a given task according to the control signal received by the robot-side signal reception means 63. Therefore, the robot-side signal transmission means 69 may employ a communication module corresponding to the home-side signal reception means 38. The humidifying means 71 has a humidifying function for conditioning indoor humidity, and when water is consumed, the humidifying means 71 may be supplied with water from the water supply unit 50 of the home station 10.

Now, the operation of the mobile robot system 1 configured as described above is described in detail with reference to FIGS. 1 to 8. When a user is away from the mobile robot (e.g., the user is not in the room or in the building where the mobile robot 60 is located), the user may call to where the mobile robot system is located. At this time, the user may call using a portable phone 3' or a wired/wireless telephone 3 (or using other phones known to those of skill in the art). If the call is connected, the user inputs an identification number using the key pad 2 of the telephone 3' or 3. If the input of the identification number is completed, the user may push the "*" button 2a or the "#" button 2b of the key pad 2 to indicate that the input of the identification number is completed. Thereafter, the user may push a number button corresponding to a task that the user wishes to command the mobile robot 60 to perform.

If the user calls, the received call judging means 21 of the call connection unit 20, which may be provided in the home station 10, determines if the incoming call is a robot control call. At this time, if the call is determined to be a robot control call when the telephone bell rings a predetermined number of times, the received call judging means 21 may connect the call. Following this, the received call judging means 21 may confirm if an identification number has been input. If no identification number has been input, the received call judging means 21 may interrupt the call. If the identification number has been input, the received call judging means 21 may transmit the call signal to the call signal conversion unit 30.

The call signal transmitted to the call signal conversion unit 30 may be transmitted to the signal conversion means 32 through the signal input part 31. The signal conversion means 32 may convert the call signal into a control signal which can be transmitted by the home-side signal transmission means 34. For example, if the home-side signal transmission means 34 employs an IR communication module, the signal conversion means 32 may convert the call signal into a corresponding IR signal.

If the signal conversion means 32 completes the conversion of the call signal to the corresponding control signal, the conversion control means 33 may transmit the converted control signal to the mobile robot 60 using the home-side signal transmission means 34. If the control signal is transmitted, the robot-side signal reception means 63 of the mobile robot 60 may receive and transmit the control signal to the robot controller 68. The robot controller 68 may access a specific program, which may be stored in the first memory 67, according to the signal received from the robot-side signal reception means 63 and may perform the desired task. For example, if the control signal received by the robot-side signal reception means 63 is a command corresponding to the "1" button of the telephone key pad 2, the robot controller 68 may access the program corresponding to the "1" button and may perform the desired task.

If the home-side signal transmission means 34 completes transmission of the control signal, the conversion control means 33 may control the signal generating means 35 to generate a call signal of a transmission completion signal, which indicates that the control signal has been transmitted to the mobile robot 60. Thereafter, the call signal of the transmission completion signal may be transmitted to the call transmission means 22 of the call connection unit 20 through the signal output part 36.

Subsequently, the call transmission means 22 of the call connection unit 20 may make a phone call to a telephone number stored in the second memory 23. If the call is connected, the call transmission means 22 may transmit the call signal received from the signal output part 36 and interrupts the call after the call is completed.

If the mobile robot 60' is provided with the robot-side signal transmission means 69 as shown in FIG. 7, it is possible to notify the user that the task has been completed. That is, if the task has been completed, the robot controller 68' may transmit a work completion signal to the home-side signal reception means 38 of the home station 10 through the robot-side signal transmission means 69. If the home-side signal reception means 38 receives the work completion signal, the conversion control means 33' may control the signal generating means 35 to generate a call signal corresponding to the received work completion signal. Thereafter, the conversion control means 33' may transmit the generated call signal to the call transmission means 22 of the call connection unit 20 through the signal output part 36. Then, the call transmission means 22 may make a phone call to a telephone number, which may be stored in the second memory 23, and may transmit the inputted call signal to the telephone number. The user can confirm that the mobile robot 60 has completed the desired work through the phone call made by the call transmission means 20.

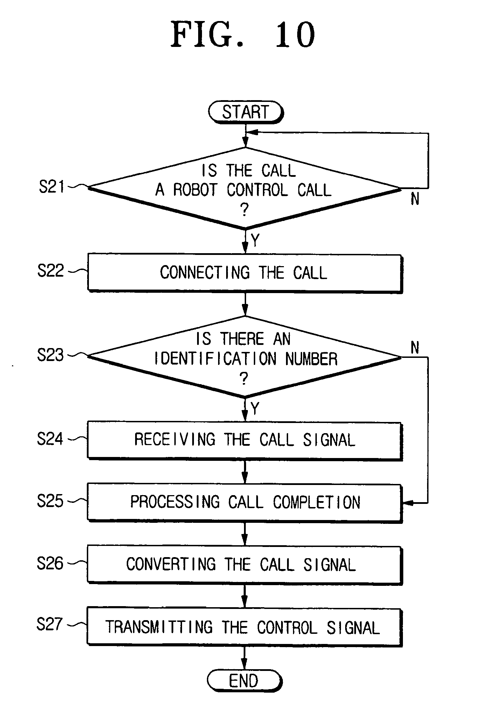

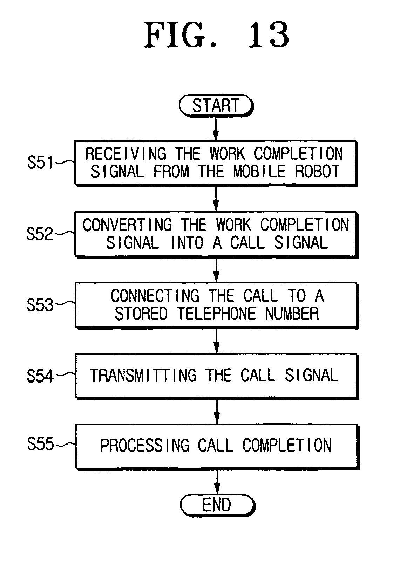

Now, a method of remotely controlling a mobile robot, which is another aspect of the present invention and can be applied to the above-mentioned mobile robot system 1, is described with reference to FIGS. 1 and 9 to 13. The method of remote controlling the mobile robot may generally be subdivided into three steps. In the first step, the user may make a phone call to the home station 10 using a telephone 3 or 3', thereby rendering a work command (S10). That is, the first step is a call signal transmission step, in which the user transmits a call signal corresponding to a work command through the telephone 3 or 3'. In the second step, the home station 10 may receive the call signal through the telephone and may transmit the call signal to the mobile robot 60 (S20). The second step may be a control signal transmission step, in which the home station 10 receives and converts the call signal into a control signal and transmits the control signal to the mobile robot 60. The third step is to perform the task, and in this step the mobile robot 60 receives the control signal and performs a task corresponding to the received control signal (S30).

In the call signal transmission step (S10), the user makes a telephone call to the home station 10, and may input an identification number and a number corresponding to a task to be done by the mobile robot using the keypad 2 of the telephone 3 or 3' (see FIG. 8) when the call is connected. If the numbers are inputted, a specific call signal may be transmitted to the home station 10 through the telephone line 9. At this time, if DTMF symbols are used, it is possible to transmit a work command by using numbers and symbols of the keypad 2.

In the control signal transmission step S20, the home station 10 may first judge whether or not the incoming call is a robot control call (S21). If it is a robot control call, the home station 10 may connect the call (S22), and may judge if an identification number is transmitted (S23). If there is an identification number, the home station 10 may receive a call signal (S24), process call completion, and interrupt the call (S25). Thereafter, the home station 10 may convert the received call signal into a control signal (S26) and may transmit the converted control signal to the mobile robot 60 (S27). In the work performing step (S30), the mobile robot 60 may receive the control signal and may perform a given task according to the received control signal.

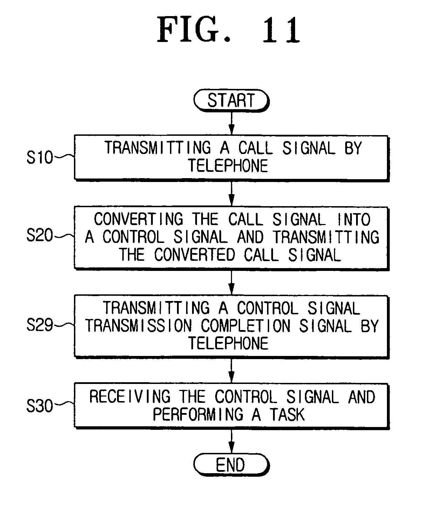

At this time, as shown in FIG. 11, after the transmission of the control signal to the mobile robot 60 has been completed by the home station 10 in the second step (S20), the inventive method may further include a step in which the home station 10 notifies the user of this status by telephone, i.e., the step of transmitting a control signal transmission completion signal by telephone (S29).

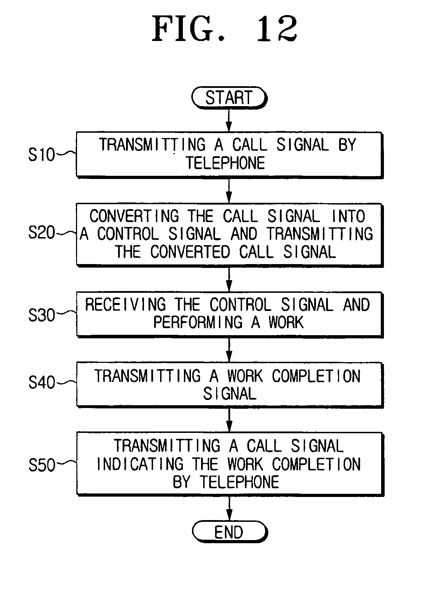

In addition, if the mobile robot 60' is capable of transmitting the work completion signal to the home station 10, i.e., if the mobile robot 60' is provided with the robot-side signal transmission means 69, the inventive method may further include a step of notifying the user of work completion. That is, as shown in FIG. 12, the inventive method may further include a step in which the mobile robot 60' transmits a work completion signal to the home station 10 after the mobile robot 60' has completed work according to a received control command (S40), and a step in which the home station 10 makes a phone call to the user and transmits a call signal corresponding to the work completion signal (S50).

The home station 10 receives the work completion signal from the mobile robot 60' (S51). Because this work completion signal is a signal that can be wirelessly communicated between the mobile robot 60' and the home station 10, the home station 10 may convert the work completion signal into a call signal, which can be transmitted through a telephone line (S52). Following this, the home station 10 may make a phone call to a telephone number (S53). The telephone number may be stored previously. If the call is connected, the home station 10 may transmit the converted call signal corresponding to the work completion signal by telephone (S54). If the transmission of the call signal is completed, the home station 10 may process call completion and may interrupt the call (S55).

As described above, according to the inventive mobile robot system and a method of remotely controlling the same, because the mobile robot may be remotely controlled using a telephone line, it is possible to remote control the mobile robot in any place where a phone call to the home station can be made. In addition, because the inventive mobile robot system and the method of remote controlling the same may use an existing telephone, it is possible to remotely control the mobile robot at low cost.

## Claims

1. A mobile robot system (1), comprising:
a mobile robot (60);
a home station (10);
a call connection unit (20) provided at the home station (10) and configured to make or receive a call through a telephone line (9); and
a call signal conversion unit (30) configured to convert the call into a control signal and to transmit the control signal to the mobile robot (60); **characterized in that**
the home station (10) is configured to accommodate the mobile robot (60) and the call connection unit (20) includes a received call judging means (21) adapted to judge if a call received through the telephone line (9) is a robot control call.

2. A mobile robot system (1) as claimed in claim 1, further comprising:
means (69) for transmitting a task completion signal from the mobile robot; and
means (38) for receiving the task completion signal at the home station (10).

3. A mobile robot system (1) as claimed in any of the claims 1 and 2, wherein the call includes a dual tone multi-frequency, DTMF, signal.

4. A mobile robot system (1) as claimed in any of the claims I to 3, wherein at least one DTMF signal corresponds to a task to be performed by the mobile robot (60).

5. A mobile robot system (1) as claimed in any of the claims 1 to 4, wherein the call signal conversion unit (30) is configured to transmit the control signal using infrared rays.

6. A mobile robot system (1) as claimed in any of the claims 1 to 4, wherein the call signal conversion unit (30) is configured to transmit the control signal using radio frequency signals.

7. A mobile robot system (1) as claimed in any of the claims 1 to 6, wherein the call connection unit (20) receives a call after an identification signal is received.

8. A mobile robot system (1) as claimed in any of the claims 1 to 7, wherein the call connection unit (20) is configured to generate a call after receipt of the task completion signal.

9. A mobile robot system (1) as claimed in any of the claims 1 to 8, wherein the home station (10) further comprises a water supply unit (50) for supplying water to the mobile robot (60).

10. A mobile robot system (1) as claimed in any of the claims I to 9, wherein the home station (10) is provided with a telephone (11) connected to the telephone line (9).

11. A method of remote controlling a mobile robot (60), wherein the method comprises the following steps:
transmitting (S10) to a home station (10) a call indicating a task using a telephone line (9);
judging (S21) at the home station (10) if the call is a robot control call;
converting (S26), by the home station (10), the call to a control signal if the call is a robot control call;
transmitting (S27) from the home station (10) the control signal to the mobile robot (60);
performing (S30), by the mobile robot (60), the task based on the control signal; and
transmitting at the home station (10) a second signal indicating that the control signal has been transmitted.

12. A method as claimed in claim 11, further comprising initiating (S29) a call to report transmission of the control signal after transmitting the second signal.

13. A method as claimed in any of the claims 11 to 12, further comprising:
transmitting (S40) a task completion signal from the mobile robot (60) after the task is completed; and
transmitting (S50) a signal corresponding to the received task completion signal from the home station (10) to a number to indicate that the task is completed.

14. A method as claimed in any of the claims 11 to 13, wherein the call includes a dual tone multi-frequency, DTMF, signal.

15. A method as claimed in claim 13, wherein at least one DTMF signal corresponds to a task to be performed by the mobile robot (60).

16. A method as claimed in claim 11, further comprising
connecting (S22) the call based at least in part on the judging;
detecting (S23) an identification number;
interrupting (S25) the call if no identification number is detected;

## Patentansprüche

1. Ein Mobilrobotersystem (1), umfassend:
einen mobilen Roboter (60);
eine Heimatstation (10);
eine Rufverbindungs-Einheit (20), angeordnet an der Heimatstation (10) und
konfiguriert, um einen Anruf über eine Telefonleitung (9) zu tätigen oder zu empfangen; und
eine Rufsignal-Wandlungseinheit (30), die konfiguriert ist, um den Anruf in ein Steuersignal zu konvertieren und um das Steuersignal zu dem mobilen Roboter (60) zu übertragen;
**dadurch gekennzeichnet, dass**
die Heimatstation (10) konfiguriert ist, um den mobilen Roboter (60) aufzunehmen und die Rufverbindungs-Einheit (20) eine Empfangsruf-Beurteilungs-Einrichtung (21) beinhaltet, geeignet, um zu beurteilen, ob ein über die Telefonleitung (9) erhaltener Anruf ein Robotersteuerungsanruf ist.

2. Ein Mobilrobotersystem (1) nach Anspruch 1, weiterhin umfassend:
Einrichtungen (69) zum Übertragen eines Aufgabenerledigungssignals von dem mobilen Roboter; und
Einrichtungen (38) zum Empfangen des Aufgabenerledigungssignals an der Heimatstation (10).

3. Ein Mobilrobotersystem (1) nach einem der Ansprüche 1 und 2, wobei der Anruf ein Dualtonmehrfrequenz-, DTMF, Signal beinhaltet.

4. Ein Mobilrobotersystem (1) nach einem der Ansprüche 1 bis 3, wobei mindestens ein DTMF-Signal mit einer vom mobilen Roboter (60) durchzuführenden Aufgabe korrespondiert.

5. Ein Mobilrobotersystem (1) nach einem der Ansprüche 1 bis 4, wobei die Rufsignal-Wandlungseinheit (30) konfiguriert ist, um das Steuersignal unter Verwendung von Infrarotstrahlen zu übertragen.

6. Ein Mobilrobotersystem (1) nach einem der Ansprüche 1 bis 4, wobei die Rufsignal-Wandlungseinheit (30) konfiguriert ist, um das Steuersignal unter Verwendung von Hochfrequenzsignalen zu übertragen.

7. Ein Mobilrobotersystem (1) nach einem der Ansprüche 1 bis 6, wobei die Rufverbindungs-Einheit (20) einen Anruf empfängt, nachdem ein Identifikationssignal empfangen ist.

8. Ein Mobilrobotersystem (1) nach einem der Ansprüche 1 bis 7, wobei die Rufverbindungs-Einheit (20) konfiguriert ist, um nach Empfang des Aufgabenerledigungssignals einen Anruf zu generieren.

9. Ein Mobilrobotersystem (1) nach einem der Ansprüche 1 bis 8, wobei die Heimatstation (10) weiterhin eine Wasserversorgungseinheit (50) zum Liefern von Wasser zu dem mobilen Roboter (60) umfasst.

10. Ein Mobilrobotersystem (1) nach einem der Ansprüche 1 bis 9, wobei die Heimatstation (10) mit einem mit der Telefonleitung (9) verbundenen Telefon (11) ausgestattet ist.

11. Ein Verfahren zum Fernsteuern eines mobilen Roboters (60), wobei das Verfahren folgende Schritte umfasst:
Übertragen (S10) eines eine Aufgabe anzeigenden Anrufs an die Heimatstation (10) unter Verwendung einer Telefonleitung (9);
Beurteilen (S21) an der Heimatstation (10), ob der Anruf ein Robotersteuerungsanruf ist;
Umwandeln (S26) des Anrufs durch die Heimatstation (10) in ein Steuerungssignal, falls der Anruf ein Robotersteuerungsanruf ist;
Übertragen (S27) des Steuersignals von der Heimatstation (10) zu dem mobilen Roboter (60);
Durchführen (S30) der auf dem Steuersignal basierende Aufgabe durch den mobilen Roboter (60); und
Übertragen eines zweiten Signals an der Heimatstation (10), welches anzeigt, dass das Steuersignal übertragen worden ist.

12. Ein Verfahren nach Anspruch 11, weiterhin das Initiieren (S29) eines Anrufes umfassend, um die Übertragung des Steuersignals nach Übertragung des zweiten Signals zu berichten.

13. Ein Verfahren nach einem der Ansprüche 11 bis 12, weiterhin umfassend:
Übertragung (S40) eines Aufgabenerledigungssignals von dem mobilen Roboter (60), nachdem die Aufgabe erledigt ist; und
Übertragen (S50) eines mit dem Aufgabenerledigungssignal korrespondierenden Signals von der Heimatstation (10) an eine Nummer, um anzuzeigen, dass die Aufgabe erledigt ist.

14. Ein Verfahren nach einem der Ansprüche 11 bis 13, wobei der Anruf ein Dualtonmehrfrequenz-, DMTF, Signal beinhaltet.

15. Ein Verfahren nach Anspruch 13, wobei mindestens ein DMTF-Signal mit einer vom mobilen Roboter (60) durchzuführenden Aufgabe korrespondiert .

16. Ein Verfahren nach Anspruch 11, weiterhin umfassend:
Verbinden (S22) des Anrufs wenigstens teilweise basierend auf der Beurteilung; Detektieren (S23) einer Identifikationsnummer;
Unterbrechung (S25) des Anrufs, falls keine Identifikationsnummer detektiert ist.

## Revendications

1. Système de robot mobile (1), comprenant :
un robot mobile (60) ;
une station d'accueil (10) ;
une unité de connexion d'appel (20) fournie à la station d'accueil (10) et configurée pour passer ou recevoir un appel par le biais d'une ligne téléphonique (9) ; et
une unité de conversion de signal d'appel (30) configurée pour convertir l'appel en un signal de commande et transmettre le signal de commande au robot mobile (60) ; **caractérisé en ce que** la station d'accueil (10) est configurée pour accueillir le robot mobile (60) et l'unité de connexion d'appel (20) comprend un moyen de jugement d'appel reçu (21) apte à juger si un appel reçu par le biais de la ligne téléphonique (9) est un appel de commande de robot.

2. Système de robot mobile (1) selon la revendication 1, comprenant en outre :
un moyen (69) pour transmettre un signal d'achèvement de tâche du robot mobile ; et
un moyen (38) pour recevoir le signal d'achèvement de tâche à la station d'accueil (10).

3. Système de robot mobile (1) selon l'une quelconque des revendications 1 et 2, dans lequel l'appel comprend un signal multifréquence à double tonalité, DTMF.

4. Système de robot mobile (1) selon l'une quelconque des revendications 1 à 3, dans lequel au moins un signal DTMF correspond à une tâche à effectuer par le robot mobile (60).

5. Système de robot mobile (1) selon l'une quelconque des revendications 1 à 4, dans lequel l'unité de conversion de signal d'appel (30) est configurée pour transmettre le signal de commande en utilisant des rayons infrarouges.

6. Système de robot mobile (1) selon l'une quelconque des revendications 1 à 4, dans lequel l'unité de conversion de signal d'appel (30) est configurée pour transmettre le signal de commande en utilisant des signaux de radiofréquence.

7. Système de robot mobile (1) selon l'une quelconque des revendications 1 à 6, dans lequel l'unité de connexion d'appel (20) reçoit un appel après qu'un signal d'identification est reçu.

8. Système de robot mobile (1) selon l'une quelconque des revendications 1 à 7, dans lequel l'unité de connexion d'appel (20) est configurée pour générer un appel après la réception du signal d'achèvement de tâche.

9. Système de robot mobile (1) selon l'une quelconque des revendications 1 à 8, dans lequel la station d'accueil (10) comprend en outre une unité d'alimentation d'eau (50) pour fournir de l'eau au robot mobile (60).

10. Système de robot mobile (1) selon l'une quelconque des revendications 1 à 9, dans lequel la station d'accueil (10) est munie d'un téléphone (11) connecté à la ligne téléphonique (9).

11. Procédé de commande à distance d'un robot mobile (60), dans lequel le procédé comprend les étapes suivantes :
transmettre (S10) à une station d'accueil (10) un appel indiquant une tâche en utilisant une ligne téléphonique (9) ;
juger (S21) à la station d'accueil (10) si l'appel est un appel de commande de robot ;
convertir (S26), par la station d'accueil (10), l'appel en un signal de commande si l'appel est un appel de commande de robot ;
transmettre (S27) à partir de la station d'accueil (10) le signal de commande au robot mobile (60) ;
effectuer (S30), par le robot mobile (60), la tâche sur la base du signal de commande ; et
transmettre à la station d'accueil (10) un deuxième signal indiquant que le signal de commande a été transmis.

12. Procédé selon la revendication 11, comprenant en outre l'étape consistant à initier (S29) un appel pour signaler la transmission du signal de commande après la transmission du deuxième signal.

13. Procédé selon l'une quelconque des revendications 11 et 12, comprenant en outre les étapes consistant à :
transmettre (S40) un signal d'achèvement de tâche à partir du robot mobile (60) après que la tâche est achevée ; et
transmettre (S50) un signal correspondant au signal d'achèvement de tâche reçu de la station d'accueil (10) à un numéro pour indiquer que la tâche est achevée.

14. Procédé selon l'une quelconque des revendications 11 à 13, dans lequel l'appel comprend un signal multifréquence à double tonalité, DTMF.

15. Procédé selon la revendication 13, dans lequel au moins un signal DTMF correspond à une tâche à effectuer par le robot mobile (60).

16. Procédé selon la revendication 11, comprenant en outre les étapes consistant à :
connecter (S22) l'appel sur la base au moins en partie du jugement ;
détecter (S23) un numéro d'identification ;
interrompre (S25) l'appel si aucun numéro d'identification n'est détecté.
